# EUROPEAN PATENT APPLICATION

(11) **EP 3 104 499 A1**
(43) Date of publication of application: **14.12.2016**
(21) Application number: 15171941.6
(22) Date of filing: 12.06.2015
(51) Int. Cl.: H02K 1/14, H02K 21/22

(54) **ARMATURE OF AN ELECTRICAL MACHINE**

(71) Applicant: Siemens Aktiengesellschaft, 80333 München (DE)
(72) Inventor: Thomas, Arwyn, Cheshire, SK8 6HW (GB)

(57) **Abstract**

The invention describes an armature (1) of an electrical machine (3), comprising an essentially cylindrical arrangement of armature segments (10), wherein an armature segment (10) comprises a bedframe (100) upon which are formed two partial outer teeth (11), one at each long side of the bedframe (100); and a plurality of inner teeth (12) arranged between the partial outer teeth (11); and comprising structural connections between adjacent partial outer teeth (11) of adjacent armature segments (10) of the cylindrical arrangement, and a plurality of windings (W), wherein each winding (W) is arranged around an inner tooth (12). The invention further describes a method of assembling an armature (1).

## Description

The invention describes an armature of an electrical machine, and a method of assembling an armature.

An electrical machine such as a motor or generator has an armature which carries the windings, and a field which carries the magnets. The magnets and windings face each other across a narrow air-gap. One component - either field or armature - rotates relative to the other stationary component. In a large electrical machine such as a wind turbine generator, the stator and rotor can have diameters in the range of several meters. When the stator is realized as the armature, it will be equipped with copper windings, and the combined weight can reach several metric tons. The windings are arranged between stator teeth that protrude from a stator yoke. It is generally easier to manufacture such a large stator in segments, arranging a suitable number of windings between the teeth of each segment and then transporting the segments to a final factory destination where the stator is then assembled.

For a state of the art generator with integer slot topology, the number of stator slots per number of rotor poles per number of phases is an integer. When manufacturing the stator for such a generator, it is convenient to segment the stator between windings, i.e. along the middle of a stator tooth. This approach allows the windings to be fully encapsulated, so that they can be better protected during transportation and installation. However, the overlapping outer ends of the windings at each end of the armature require significant additional copper amounts, adding to the cost of the machine. Furthermore, to minimize losses, much effort must be invested in ensuring that the winding overhang is equivalent for each of the phases.

In a "concentrated winding" topology, a winding is arranged to enclose a single tooth. This simplifies design, since there is no longer any complicated overlapping of windings at the outer ends of the armature. However, application of the known segmented manufacturing methods would require that the segments are first joined before mounting the windings over the stator teeth, resulting in significantly increased manufacturing costs. The additional effort is considerable, even if it is limited to the windings that will be arranged about the split stator teeth. A less costly approach would be to arrange the segment boundaries in the stator yoke and to join the segments by aligning and connecting complementary stator yoke faces. However, a disadvantage of this approach is that the outermost sides of the two outer windings remain exposed until the segments are joined. These outer windings must be securely held in place until the segments are joined, requiring additional retaining means. Furthermore, the "outer" windings must be separately encapsulated. Furthermore, a connection limited to the stator yoke is less robust owing to the smaller available surface area.

It is therefore an object of the invention to provide an improved armature design.

This object is achieved by the armature of claim 1 and by the method of claim 12 of assembling an armature.

According to the invention, an armature of an electrical machine comprises an essentially cylindrical arrangement of armature segments, wherein an armature segment comprises a bedframe or yoke portion upon which are formed
- two partial outer teeth, one at each long side of the bedframe; and
- a plurality of inner teeth arranged between the partial outer teeth;
and wherein the armature comprises structural connections between adjacent partial outer teeth of adjacent armature segments of the cylindrical arrangement. The armature according to the invention further comprises a plurality of windings, wherein each winding is arranged around an inner tooth.

The modular armature according to the invention is essentially a hybrid, with wound (i.e. loaded) teeth interspersed with unwound (i.e. empty) teeth. An advantage of the armature according to the invention is that the partial outer teeth allow for armature segmentation at regular intervals, as well as a relatively straightforward connection of adjacent armature segments. An electrical machine comprising such an armature can therefore enjoy the benefits of a "double layer" winding topology, which minimizes generator inductance and parasitic losses. Since each inner tooth is loaded with one winding, the space between adjacent inner teeth is occupied by two distinct windings, giving rise to the term "double layer". Furthermore, the armature according to the invention can be manufactured without significant additional costs owing to the straightforward armature segmentation.

According to the invention, the method of assembling an armature of an electrical machine comprises the steps of
- providing a plurality of armature segments, each of which comprises a bedframe upon which are formed two partial outer teeth, one at each long side of the bedframe, and a plurality of inner teeth arranged between the partial outer teeth;
- providing a plurality of windings and arranging a winding around each inner tooth; and
- structurally connecting the armature segments to give an essentially cylindrical armature.

An advantage of the method according to the invention lies in optimizing the armature topology by deliberately leaving unwound or "empty" teeth at specific intervals in order to permit armature segmentation. The method according to the invention allows a cost-effective modular realisation to obtain an armature with a favourable level of performance. Another advantage of the method according to the invention is that the windings can be encapsulated from the outset, i.e. before the windings are actually arranged on the inner teeth. This can significantly reduce the risk of damage to a winding during the assembly stages.

Particularly advantageous embodiments and features of the invention are given by the dependent claims, as revealed in the following description. Features of different claim categories may be combined as appropriate to give further embodiments not described herein.

The term "winding" is used in its established context, i.e. a winding is an electrical conductor in which a current flows during operation of the electrical machine. In a generator such as a wind turbine generator, currents are induced in the armature windings by the relative rotation of the field magnets. Usually, a single "winding" comprises a stack of copper conductors and generally has a rectangular cross-section. The terms "winding" and "coil" are synonymous.

In the following, it may be assumed that the electrical machine is a generator, for example a generator of a wind turbine. Such a generator can have a rated power of several Megawatts, and the generator dimensions are accordingly large. For example, the armature of a multi-megawatt MW generator may have a diameter of several meters, and can weigh several metric tons. Large quantities of copper are required for the windings of such a large machine, so that any reduction in the material requirements can significantly lower the costs. The cylindrical arrangement of armature segments can be realized to enclose an inner field, or may be arranged within an outer field. In the following, without restricting the invention in any way, it may be assumed that the armature is the stator of a direct-drive wind turbine generator with outer rotor. The terms "armature" and "stator" may be used interchangeably in the following. Likewise, the terms "electrical machine" and "generator" may be used interchangeably. The stator segments can be realized for mounting on a hollow shaft in the interior of the generator. Equally, the cylindrical arrangement of stator segments can result in an interior cavity that can be used to accommodate a cooling arrangement, an access passageway, etc. The stator segments can be made using any suitable construction technique, for example a stator segment can comprise a stack of laminate sheets. In the context of the invention, it may be assumed that each armature tooth runs essentially parallel to the axis of rotation of the electrical machine.

Adjacent stator segments can be connected in any suitable manner. In a preferred embodiment of the invention, a structural connection comprises a form-fit connection such as a tongue-and-groove or dovetail connection. Alternatively or in addition, a structural connection can comprise a number of fasteners such as bolts, studs, rivets etc.

The partial outer teeth of a stator segment preferably have complementary shapes. In an embodiment of the invention, each partial outer tooth can have essentially the same dimensions as a half inner tooth, so that a pair of structurally connected partial outer teeth has essentially the same dimensions as an inner tooth. In other words, a pair of structurally connected partial outer teeth may have essentially the same total width and the same height as an inner tooth. An advantage of this realization is that the armature segments are essentially symmetrical in construction so that production costs can be kept favourably low. Alternatively, in another preferred embodiment of the invention, the partial outer teeth can be dimensioned so that, when connected, an unwound armature tooth is wider or narrower than a wound tooth. In such an embodiment, the partial outer teeth are preferably dimensioned to achieve a desired improvement in generator performance.

When joined, the two partial outer teeth of adjacent armature segments essentially form an unwound armature tooth. In a preferred embodiment of the invention, a structural connection between adjacent partial outer teeth of adjacent armature segments comprises essentially complete surface contact between the adjacent partial outer teeth. In other words, essentially no gap remains between adjacent armature segments.

An armature segment of the armature according to the invention can have two or more inner teeth. An electrical machine such as a generator can be constructed to generate polyphase power. Usually, a generator will be used to generate three-phase power. When used in such a generator, the armature preferably comprises armature segments that have three inner teeth arranged between their partial outer teeth. Each inner tooth can then be wound with one winding of each of the three phases, i.e. each inner tooth is loaded with or enclosed by a single winding of one of the phases.

Preferably, the armature segments of an armature according to the invention are essentially identical in shape and size, thereby simplifying construction. The number of segments may depend to some extent on the diameter of the armature. In a preferred embodiment of the invention, the armature is used as the stator of a wind turbine generator, and comprises at least eight armature segments.

An armature segment according to the invention can be prepared in advance, for example by arranging encapsulated windings on the inner teeth in readiness for armature assembly. In a particularly preferred embodiment of the invention, the windings are already encapsulated, i.e. a winding is enclosed by an insulating wrapper before being arranged on an inner tooth of an armature segment. Preferably, a single winding is arranged around each inner tooth.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a number of armature segments in an embodiment of an armature according to the invention;
Fig. 2 shows an embodiment of an armature segment according to the invention;
Fig. 3 shows an embodiment of a generator according to the invention;
Fig. 4 shows a portion of a first prior art armature;
Fig. 5 shows a portion of a second prior art armature;
Fig. 6 shows a detail of the armature portion of Fig. 5.

In the diagrams, like numbers refer to like objects throughout. Objects in the diagrams are not necessarily drawn to scale. Stator sections may be shown in the diagrams as flat sections, but it may be assumed that the radius of curvature is large, and that the stator sections are curved in reality.

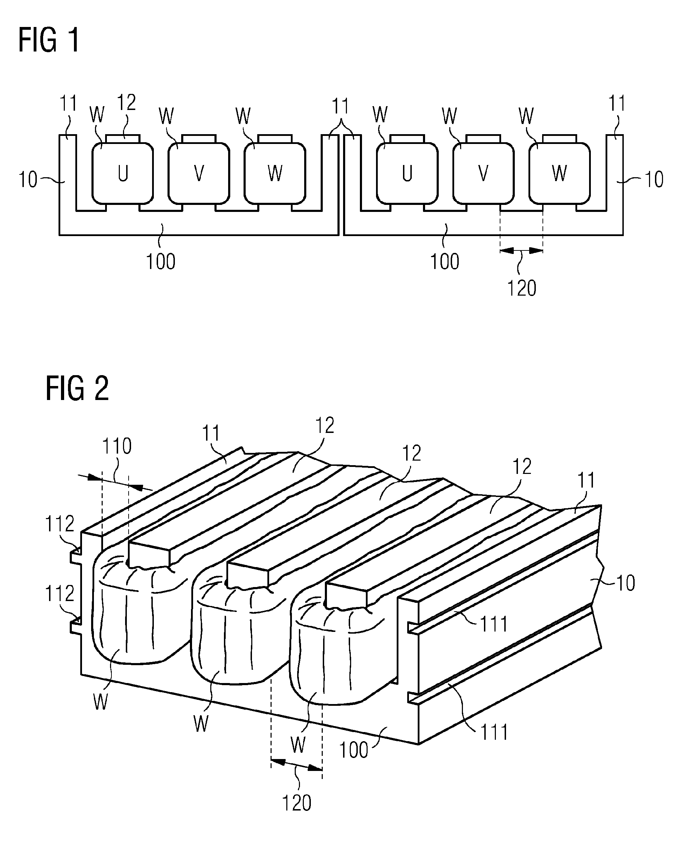

Fig. 1 shows a number of armature segments 10 in an embodiment of an armature 1 according to the invention. Each armature segment 10 has a bedframe 100 or yoke portion 100 carrying three inner teeth 12 and two partial outer teeth 11 at each outer edge of the bedframe 100. Each inner tooth 12 is loaded with a single winding W of a three-phase generator with phases U, V, W. Adjacent armature sections 10 are joined by structural connections between the partial outer teeth 11. In this exemplary embodiment, a pair of connected partial outer teeth 11 (an "unwound tooth") has essentially the same size as an inner tooth 12. A gap 120 between adjacent inner teeth 12 is sufficient to accommodate two straight sections of two distinct windings W. This is illustrated in Fig. 2, which offers a perspective view of part of an armature section 10. The diagram more realistically indicates the snug fit between neighbouring windings W. Each winding W was wrapped in an encapsulating material before being put into place on its inner tooth 12. Fig. 2 shows the end of an armature segment that will be arranged at the drive end of a generator. At the non-drive end, the windings of one phase are electrically connected by busbars or the like. The distance 110 between a partial outer tooth 11 and an inner tooth 12 is less than the distance 120 between adjacent inner teeth 12, since only one straight winding section needs to be accommodated between a partial outer tooth 11 and an inner tooth 12. The diagram also shows elements 111, 112 of one possible embodiment of a structural connection, in this case a tongue-and-groove connection.

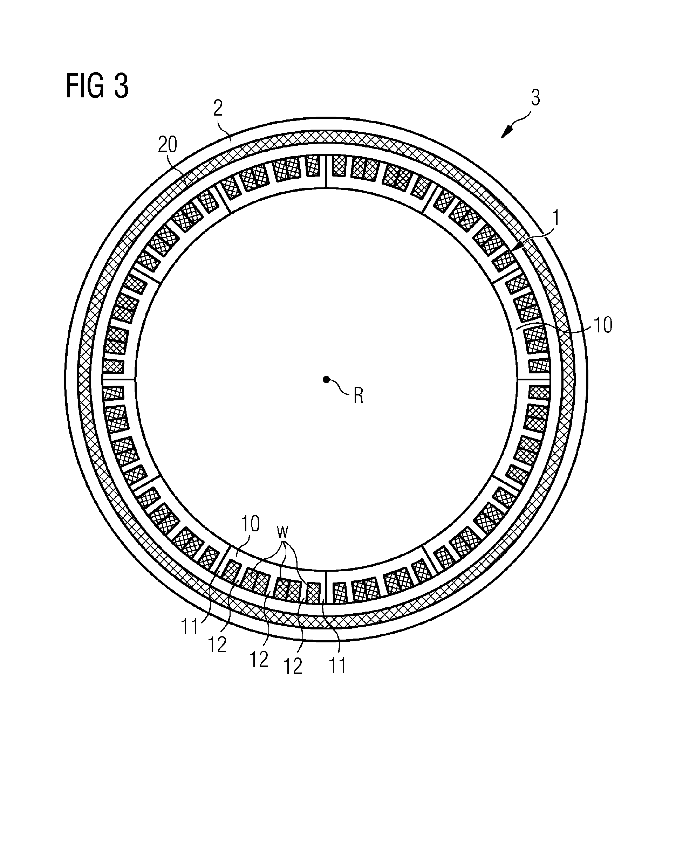

Fig. 3 shows a very simplified diagram of an embodiment of a generator 3 according to the invention. In this exemplary embodiment, the armature 1 is an inner stator 1 and comprises twelve armature segments 10 (the inner stator teeth 12, partial outer teeth 11 and windings W are indicated for one exemplary segment 10, and may be assumed to be realised in the manner described above with the aid of Figs. 1 and 2). The stator 10 is arranged in the interior of an outer rotor 2, which carries an arrangement of magnets 20 (indicated collectively by the cross-hatched area) that face the windings across an airgap. The diagram also indicates the axis of rotation R of the generator 3.

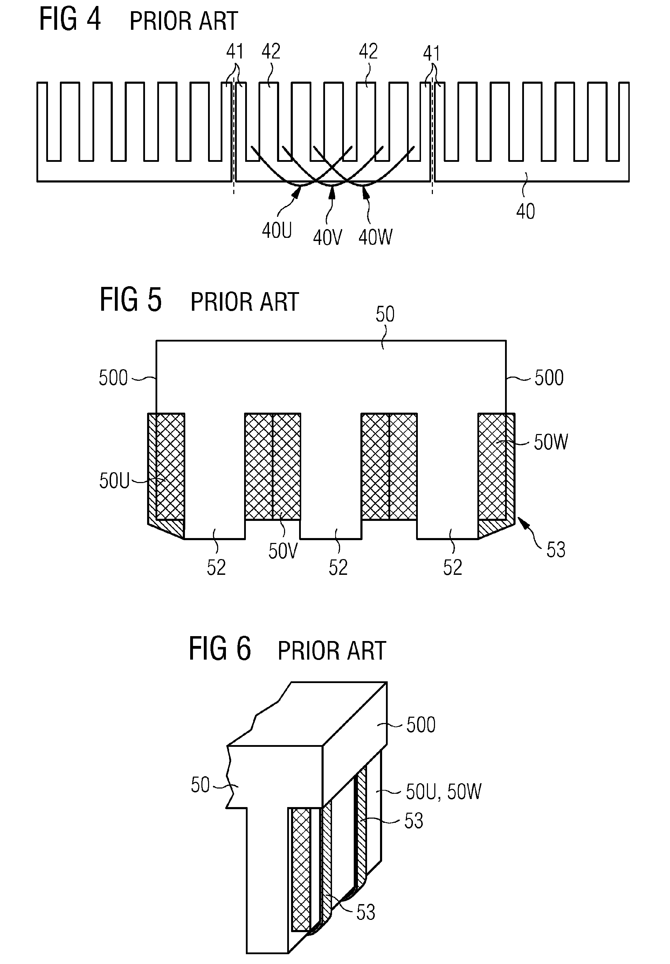

Fig. 4 shows a portion of a first prior art armature, which comprises armature segments 40. Windings 40U, 40V, 40W are arranged on the armature segments as indicated schematically. In this prior art topology, the gap between adjacent stator teeth 41, 42 only accommodates one straight section of a winding 40U, 40V, 40W. At each end of the armature, the windings 40U, 40V, 40W overlap in a winding overhang, which is complicated in construction and which utilizes a significant additional quantity of copper. The overlapping end sections of neighbouring windings 40U, 40V, 40W are of different lengths, and care must be taken during design and construction to ensure equal total winding lengths of the three phases.

Fig. 5 shows a portion of a second prior art armature. In this prior art realization, the gap between adjacent stator teeth 52 accommodates two straight sections of two distinct windings 50U, 50V, 50W. The armature segments only bear inner teeth 52, and the end faces 500 of the armature segments must be connected at the bedframe or yoke level. Apart from the added difficulty of this type of construction, the outer winding sections (one half of winding 50U and one half of winding 50W in the diagram) must be secured before armature assembly using additional supporting elements 53 such as retaining clips as indicated in Fig. 6. This adds to the effort and cost, and also increases the risk of damage to the exposed faces of the windings 50U, 50W during the armature assembly process.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. An armature (1) of an electrical machine (3), comprising an essentially cylindrical arrangement of armature segments (10), wherein an armature segment (10) comprises a bedframe (100) upon which are formed
- two partial outer teeth (11), one at each long side of the bedframe (100); and
- a plurality of inner teeth (12) arranged between the partial outer teeth (11);
and comprising structural connections between adjacent partial outer teeth (11) of adjacent armature segments (10) of the cylindrical arrangement, and a plurality of windings (W), wherein each inner tooth (12) is enclosed by a single winding (W).

2. An armature according to claim 1, wherein a structural connection comprises a form-fit connection.

3. An armature according to claim 1 or claim 2, wherein a structural connection comprises a number of fasteners.

4. An armature according to any of the preceding claims, wherein a structural connection between adjacent partial outer teeth (11) of adjacent armature segments (10) comprises essentially complete surface contact between the adjacent partial outer teeth (11).

5. An armature according to any of the preceding claims, wherein the partial outer teeth (11) of the armature (10) are realized such that a pair of structurally connected partial outer teeth (11) has essentially the same dimensions as an inner tooth (12).

6. An armature according to any of the preceding claims, wherein an armature segment (10) comprises three inner teeth (12) arranged between its partial outer teeth (11).

7. An armature according to any of the preceding claims, comprising at least eight armature segments (10).

8. An armature segment (10) for an armature (1) according to any of claims 1 to 7.

9. An armature segment according to claim 8, comprising a protective encapsulation about each winding (W).

10. A generator with a rotor (2) and a stator (1), wherein the stator (1) comprises an armature (1) according to any of claims 1 to 7.

11. A wind turbine comprising a generator (3) according to claim 10.

12. A method of assembling an armature (1) of an electrical machine (3), which method comprises the steps of
- providing a plurality of armature segments (10), each of which comprises a bedframe (100) upon which are formed two partial outer teeth (11), one at each long side of the bedframe (100), and a plurality of inner teeth (12) arranged between the partial outer teeth (11);
- providing a plurality of windings (W) and arranging a winding (W) around each inner tooth (12);
- structurally connecting the armature segments (10) to give an essentially cylindrical armature (1).

13. A method according to claim 12, wherein the step of arranging a winding (W) around an inner tooth (12) is preceded by a step of encapsulating the winding (W) in a protective material.
